# EUROPEAN PATENT SPECIFICATION

(11) **EP 3 032 687 B1**
(45) Date of publication and mention of the grant of the patent: **29.11.2017**
(21) Application number: 14826192.8
(22) Date of filing: 10.07.2014
(51) Int. Cl.: H02J 7/04, H02J 5/00, H02J 7/00, H02J 50/90, H02J 50/60, H02J 7/02

(54) **CONTACTLESS CHARGER, PROGRAM THEREFOR, AND AUTOMOBILE EQUIPPED WITH SAME**
KONTAKTLOSE LADEVORRICHTUNG, PROGRAMM DAFÜR UND KRAFTFAHRZEUG DAMIT
CHARGEUR SANS CONTACT, PROGRAMME ASSOCIÉ, ET AUTOMOBILE ÉQUIPÉE DUDIT CHARGEUR SANS CONTACT

(30) Priority: 18.07.2013 JP 2013149272; 22.07.2013 JP 2013151405
(43) Date of publication of application: 15.06.2016
(73) Proprietor: Panasonic Intellectual Property Management Co., Ltd., Osaka-shi, Osaka 540-6207 (JP)
(72) Inventor: HATAKEYAMA, Ken, Osaka-shi,Osaka 540-6207 (JP); YAMANISHI, Yuto, Osaka-shi,Osaka 540-6207 (JP); SEKI, Toshiaki, Osaka-shi,Osaka 540-6207 (JP)
(74) Representative: Grünecker Patent- und Rechtsanwälte PartG mbB
(86) International application number: PCT/JP2014/003664
(87) International publication number: WO 2015/008462

(56) References cited:
- EP-A2- 2 043 226
- WO-A1-2012/132144
- JP-A- 2006 060 909
- JP-A- 2006 060 909
- JP-A- 2011 211 874
- JP-A- 2012 090 374
- JP-A- 2013 034 292
- US-A1- 2009 224 723
- US-A1- 2010 315 038

## Description

### TECHNICAL FIELD

The present invention relates to a contactless charger that charges mobile devices such as mobile phones in a non-contact (contactless) manner, a program thereof, and an automobile equipped with the same.

### BACKGROUND ART

As mobile devices such as mobile phones have extremely advanced functions, power consumption increases.

Therefore, charging is allowed to be performed in many places including the interior of an automobile. In addition, non-contact (contactless) charging using the principle of electromagnetic induction and magnetic field resonance without using a cable is popular as a recent trend.

Then, the following device has been proposed as a contactless charger satisfying such a demand.

In addition, the contactless charger includes a body case having an installation plate on an upper surface thereof, a position detector that detects the position of a mobile device installed on the installation plate, and a charging coil that is disposed below the installation plate. Then, contactless charging is performed by moving the charging coil to the position of the mobile device that is detected by the position detector, and energizing the charging coil (for example, PTL 1).

PTL 2 relates to a battery charging pad. Charging is performed between the transmitting coil of the charger and the receiving coil of the device to be charged by magnetic induction. The transmitting coil is moved with motors close to the receiving coil based on the position of the device to be charged detected by the position detector of the charger. The position detection controller comprises a plurality of fixed position detection coils supplied with pulse signals and a receiving circuit which receives echo signals of the pulse signals output from the receiving coil. Foreign matter is detected by analyzing the waveform of the echo signal.

PTL 3 relates to a charging apparatus for contactless charging of an external device. A position detector is used to detect the position of a placed object. The determining unit determines whether the placed object is not compatible with the charging unit. Charging is restricted if a not compatible device is placed close-by to the charging unit and the user may be notified. Magnetic field sensors are used for detection of an object and its position as well as temperature sensors. Determination whether or not a device is chargeable is performed by "*IC authentication"* based on an IC tag, containing an IC chip, provided in a device.

PTL 4 relates to a control device for wireless power transmission. The transmitting coil, which may be made of magnetic material is moved along a scan pattern. The inductance of the transmitting coil increases with decreasing distance to the receiving coil, causing the coil end voltage or coil current to decrease. If the measured decrease reaches a threshold, the scanning is stopped and power transmission may start.

PTL 5 relates to a device for charging mobile devices. It contains a power transmission coil, which can be moved towards the detected receiving coil of the mobile device placed on the installation plate. A plurality of detecting position coils for detecting the X coordinate and the Y coordinate are arranged at close intervals and emit pulse signals. Receiving circuits receive an echo signal excited by the pulse signal. Position detection is based on an echo signal of a maximum level.

### Citation List

### Patent Literature

PTL 1: Japanese Patent Unexamined Publication No. 2009-247194
PTL 2: US 2010/315038 A1
PTL 3: US 2009/224723 A1
PTL 4: EP 2043226 A2
PTL 5: WO 2012/132144 A1

### SUMMARY OF THE INVENTION

### TECHNICAL PROBLEMS

A problem with such a contactless charger is that when for example, a conductive foreign matter such as a coin is placed on the upper surface of the installation plate, and then a mobile device is placed thereon, magnetic flux from the charging coil is also supplied to the conductive foreign matter, which results in an increase in the temperature of the conductive foreign matter.

In particular, when the contactless charger is installed in the interior of an automobile, a mobile device placed on the installation plate, which is the upper surface of the body case, is affected from the acceleration and vibration of the automobile. Therefore, the contactless charger has a so-called box shape in which a portion of the body case on the circumference of the installation plate protrudes upward from the installation plate in order to prevent the mobile device from falling out.

If such a box-shaped contactless charger is installed in the interior of an automobile, despite a state where a coin or the like is present on the installation plate, the user may place a mobile device thereon to try to charge it without noticing the state. In such a case, charging is started in a state where a coin is caught between the charging coil and the mobile device, and as a result, there is a problem that the temperature of the conductive foreign matter increases.

Accordingly, an object of the present invention is to suppress an increase in the temperature of a conductive foreign matter during charging, even if a mobile device is placed on the conductive foreign matter.

### SOLUTIONS TO PROBLEMS

The invention is defined by the features of the independent claims. Preferred embodiments are defined in the dependent claims.

In order to achieve the object, a first aspect of the present disclosure is a contactless charger in which an upper surface of a body case is an installation plate, and the contactless charger is formed as follows. A position detector is disposed on or below the installation plate, and detects the presence of a mobile device on the installation plate, a foreign matter detector detects a conductive foreign matter that is present on the installation plate, and a controller drives an alarm unit that emits an alarm to a user, based on detection results of the position detector and the foreign matter detector, and thus an intended object is achieved.

### ADVANTAGEOUS EFFECTS OF INVENTION

As described above, the first aspect of the present disclosure is a contactless charger in which an upper surface of a body case is an installation plate, and the contactless charger is configured as follows. A position detector is disposed on or below the installation plate, and detects the presence of a mobile device on the installation plate, a foreign matter detector detects a conductive foreign matter that is present on the installation plate, and a controller drives an alarm unit that emits an alarm to a user, based on detection results of the position detector and the foreign matter detector, and thus it is possible to suppress an increase in the temperature of the conductive foreign matter, even if the mobile device is placed on the conductive foreign matter.

In other words, in a state where a conductive foreign matter is present but a mobile device is not present on the installation plate, the detection of the conductive foreign matter is possible by the foreign matter detector. Further, even if the conductive foreign matter is placed on the installation plate, the position detector can distinguish and detect a mobile device that emits an echo signal by resonating with a pulse signal of 1 MHz.

Since the characteristics of the foreign matter detector and the position detector are utilized, when the conductive foreign matter is placed on the installation plate and thereafter the mobile device is placed on the conductive foreign matter, the user can be notified of the presence of the foreign matter, before an increase in the temperature of the conductive foreign matter due to the start of charging.

Thus, the user removes, for example, the conductive foreign matter in response to the alarm by the alarm unit, and as a result, it is possible to suppress an increase in the temperature of the conductive foreign matter.

### BRIEF DESCRIPTION OF DRAWINGS

FIG. 1 is a perspective view illustrating a state where a contactless charger according to an exemplary embodiment is provided in an automobile.
FIG. 2 is a perspective view illustrating the contactless charger.
FIG. 3 is a perspective view illustrating the contactless charger.
FIG. 4 is a perspective view illustrating a state where a part of the contactless charger is removed.
FIG. 5 is a plan view illustrating a state where a part of the contactless charger is removed.
FIG. 6 is a side cross-sectional view of the contactless charger.
FIG. 7 is a perspective view illustrating a state where a part of the contactless charger is removed.
FIG. 8 is a plan view illustrating a state where a part of the contactless charger is removed.
FIG. 9 is a control block diagram of the contactless charger.
FIG. 10 is an operation flowchart of the contactless charger.
FIG. 11 is a diagram illustrating a detection coil of the contactless charger.
FIG. 12 is a diagram illustrating the detection coil of the contactless charger.
FIG. 13 is a diagram illustrating the detection coil of the contactless charger.
FIG. 14 is an operation flowchart of the contactless charger.
FIG. 15 is a diagram illustrating an operation state of the contactless charger.
FIG. 16 is an operation flowchart of the contactless charger.
FIG. 17 is an operation flowchart of a contactless charger of a modification example.

### DESCRIPTION OF EMBODIMENTS

Hereinafter, an exemplary embodiment of the present invention will be described with reference to the accompanying drawings.

### (Exemplary embodiment 1)

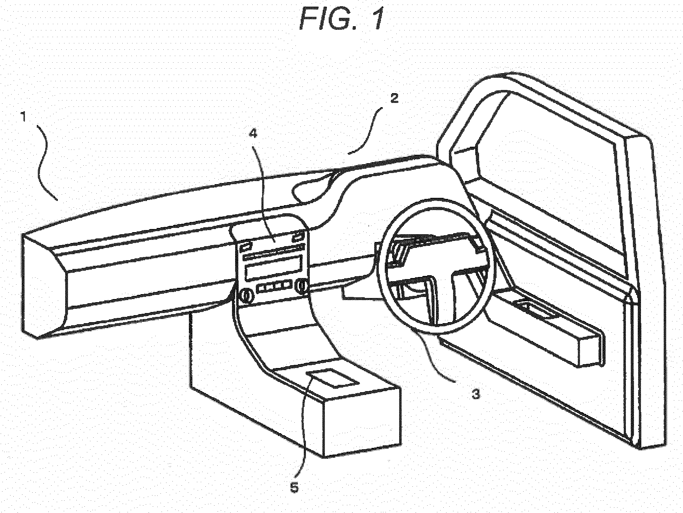

In FIG. 1, steering wheel 3 is provided in front of interior 2 of automobile 1.

Electronic device 4 that plays music and videos and displays a car navigation image and the like is provided on the side of steering wheel 3.

Contactless charger 5 is provided in the rear of electronic device 4 in automobile interior 2.

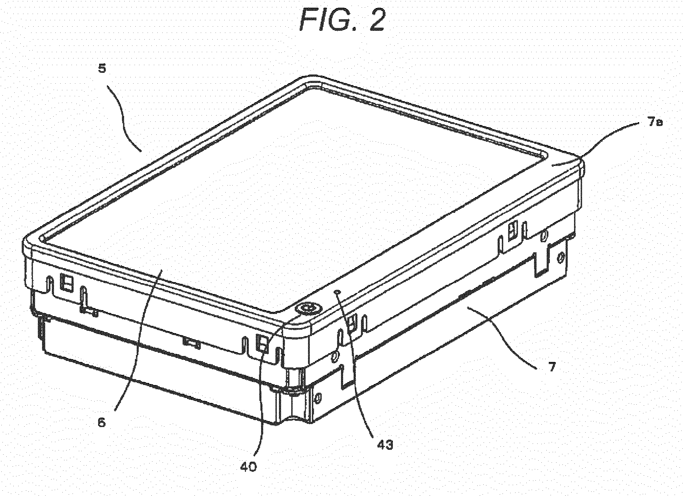

As illustrated in FIGS. 2 to 6, contactless charger 5 includes box-like body case 7 having installation plate 6 placed on the upper surface thereof.

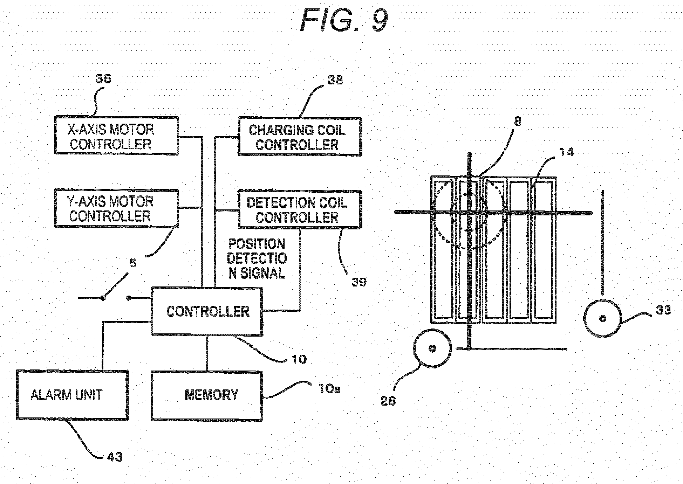

Body case 7 includes charging coil 8 therein that is provided movably in a horizontal direction in a state of facing the lower surface of installation plate 6. Further, body case 7 includes controller (10 in FIG. 9) connected to driving means 9 that moves charging coil 8 in the horizontal direction so as to face the lower surface of installation plate 6.

Hereinafter, respective units will be described in detail.

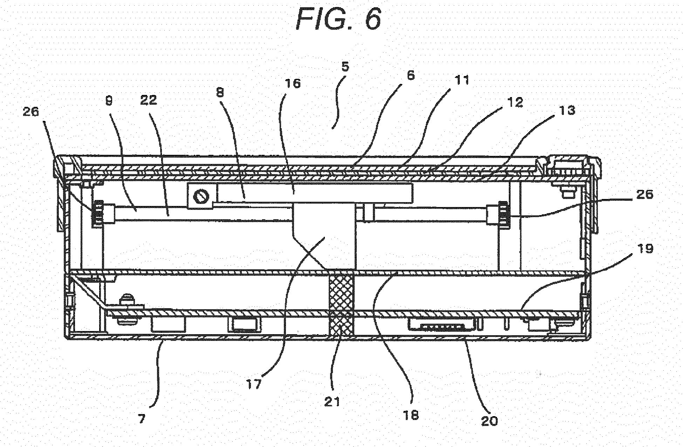

As illustrated in FIG. 6, installation plate 6 is formed by polymerizing surface plate 11, intermediate plate 12, and back plate 13.

Each of surface plate 11 and back plate 13 is made of synthetic resin, and intermediate plate 12 is made of ceramic. In other words, installation plate 6 is formed to allow the magnetic flux from charging coil 8 to pass through towards mobile device 15.

Position detection coil 14 (an example of a position detector) of FIG. 9 is provided on the surface of intermediate plate 12.

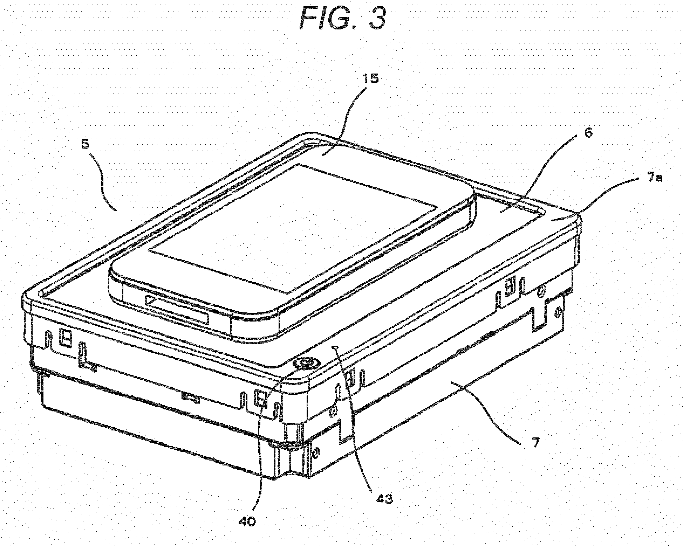

This position detection coil 14 is used in PTL 1 (Japanese Patent Unexamined Publication No. 2009-247194), and is formed to detect whether or not mobile device 15 is placed in any position of the upper surface of installation plate 6, as in FIG. 3.

Next, driving means 9 moves charging coil 8 up to a position facing the terminal charging coil (not illustrated) of mobile device 15.

Next, charging coil 8 will be described.

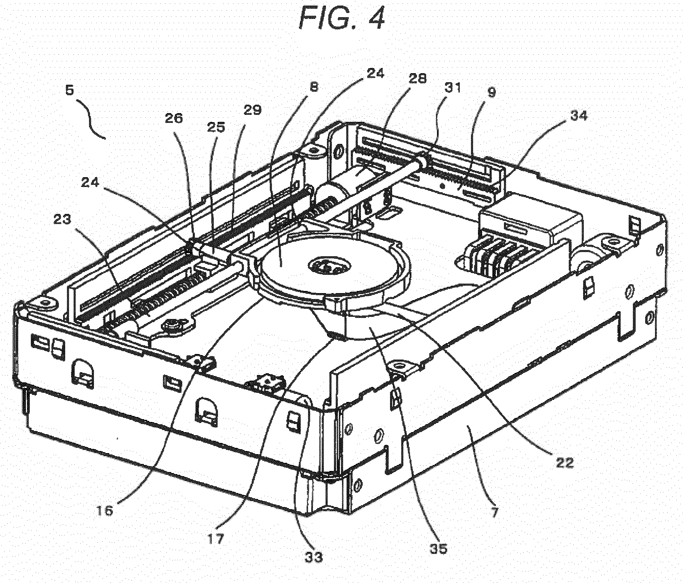

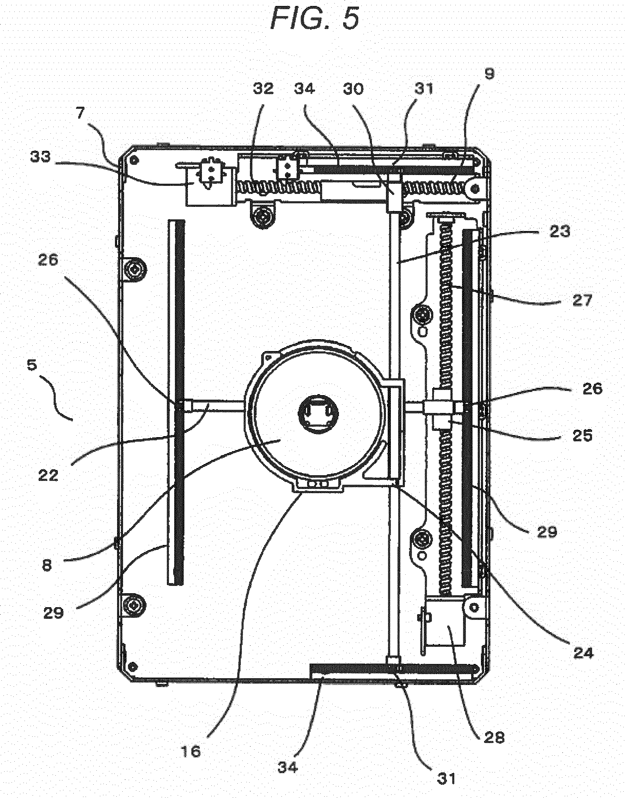

As will be understood from FIGS. 4 and 5, charging coil 8 is formed by turning a lead wire into an annular shape a plurality of times, and the circumference side and the lower surface side are held in a state in which they are covered with holder 16 made of synthetic resin.

Support leg 17 extending downward towards charging coil 8 is integrally formed of synthetic resin on the lower surface of holder 16, as in FIG. 6.

In addition, since a gap of 0.3 mm is provided between the lower surface of support leg 17 and the upper surface of electrically conductive support plate 18 that is disposed below support leg 17, the lower surface of support leg 17 does not come into contact with the upper surface of support plate 18 during movement of charging coil 8 in a normal state.

In addition, control board 19, and lower plate 20 of body case 7 are disposed below support plate 18, and support body 21 passing through control board 19 is provided between the lower surface of support plate 18 and the upper surface of lower plate 20.

Next, driving means 9 will be described.

As illustrated in FIGS. 4 and 5, driving means 9 includes X-axis drive shaft 22, and Y-axis drive shaft 23. Further, the intermediate portion of each of X-axis drive shaft 22 and Y-axis drive shaft 23 is connected to holder 16 as well as the charging coil holding unit of holder 16.

In other words, a through hole (not illustrated) through which X-axis drive shaft 22 penetrates and through hole 24 through which Y-axis drive shaft 23 penetrates are provided by being crossed at a predetermined interval in a vertical direction in holder 16. Since X-axis drive shaft 22 and Y-axis drive shaft 23 penetrate through the through holes, they are engaged.

Further, worm wheel 25 is provided on one end side of X-axis drive shaft 22, and gear 26 is provided on one end and gear 26 is also provided on the other end.

Then, worm wheel 25 is engaged with worm 27, and worm 27 is connected to motor 28.

Both gears 26 are respectively engaged with gear plates 29.

Therefore, if motor 28 is driven, worm 27 is rotated, such that worm wheel 25 and X-axis drive shaft 22 move in the X-axis direction, resulting in the movement of charging coil 8 in the X-axis direction.

Further, worm wheel 30 is provided on one end side of Y-axis drive shaft 23, and gear 31 is provided on one end and gear 31 is also provided on the other end.

Then, worm wheel 30 is engaged with worm 32, and worm 32 is connected to motor 33.

Both gears 31 are respectively engaged with gear plates 34.

Therefore, if motor 33 is driven, worm 32 is rotated, such that worm wheel 30 and Y-axis drive shaft 23 move in the Y-axis direction, resulting in the movement of charging coil 8 in the Y-axis direction.

As illustrated in FIG. 4, the end portion of flexible wiring 35 for energizing charging coil 8 is fixed to the side of support leg 17 described above.

As illustrated in FIG. 9, controller 10 is connected to motor 28 through X-axis motor controller 36, and is connected to motor 33 through Y-axis motor controller 37.

Further, controller 10 is connected to charging coil 8 through charging coil controller 38, and is connected to position detection coil 14 through detection coil controller 39.

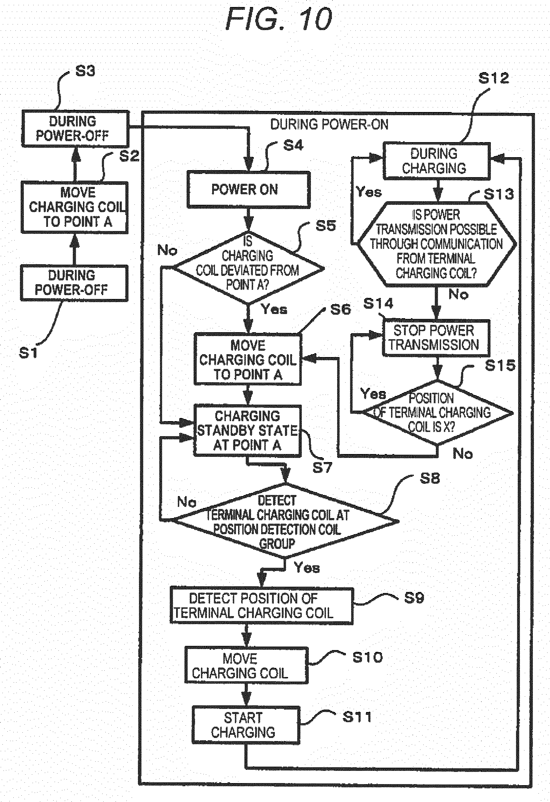

In the above configuration, in the present exemplary embodiment, if power switch 40 that is provided in the circumferential portion of installation plate 6 of body case 7 illustrated in FIG. 2 is turned off (S1 in FIG. 10), as illustrated in FIGS. 4 to 6, charging coil 8 is moved to the center (hereinafter, referred to as point A) of body case 7 (S2 in FIG. 10), and is in a power-off state by controller 10 (S3 in FIG. 10).

In other words, as in FIG. 2, in a state where mobile device 15 is not placed on installation plate 6 of body case 7, installation plate 6 is in a state of being exposed in automobile interior 2 as in FIG. 1.

Therefore, a situation also occurs in which the user puts their hand on installation plate 6 by mistake, and in this case, excessive weight may be applied depending on installation plate 6.

Thus, in the present exemplary embodiment, as illustrated in FIGS. 4 to 6, charging coil 8 is moved to the center of body case 7, and the above-mentioned excessive weight is supported by charging coil 8, holder 16, support leg 17, and support plate 18.

In other words, if installation plate 6 is in a state where excessive weight is applied thereto, installation plate 6 is curved downward slightly, but in this state, charging coil 8, holder 16, and support leg 17 also move downward, and the lower surface of support leg 17 comes into contact with the upper surface of support plate 18.

As a result, the excessive weight is supported by support plate 18 through installation plate 6, charging coil 8, holder 16, and support leg 17, and thus it is possible to suppress damage to installation plate 6 and charging coil 8.

Incidentally, in the present exemplary embodiment, it is formed such that the lower surface of support plate 18 is supported by lower plate 20 of body case 7 through support body 21 in order to increase the strength against the excessive weight.

Further, if such excessive weight is removed, installation plate 6 elastically returns upward, and charging coil 8 and holder 16 also return upward by X-axis drive shaft 22 and Y-axis drive shaft 23 returning elastically, such that the lower surface of support leg 17 is disposed with a gap on the upper surface of support plate 18.

Therefore, support leg 17 does not have an obstacle during the following movement of charging coil 8.

During charging of mobile device 15, first, power switch 40 is turned on (S4 in FIG. 10), and mobile device 15 is placed on the upper surface of installation plate 6.

Even in this state, in the present exemplary embodiment, first, controller 10 checks whether or not charging coil 8 is present on point A (S5 in FIG. 10).

The checking can be determined based on the driving amounts of motors 28 and 33 that are stored in X-axis motor controller 36 and Y-axis motor controller 37.

When it is determined that charging coil 8 is not present on point A, charging coil 8 is moved to point A (S6 in FIG. 10) and is in a charging standby state at point A by controller 10 (S7 in FIG. 10).

Next, controller 10 detects a position on the upper surface of installation plate 6 in which mobile device 15 is placed, using position detection coil 14, as in FIG. 3 (S8 and S9 in FIG. 10).

In addition, the location where mobile device 15 is placed is actually the location of a terminal charging coil (not illustrated) built into mobile device 15.

Thereafter, controller 10 causes X-axis motor controller 36 and Y-axis motor controller 37 to drive motors 28 and 33 so as to move charging coil 8 to the detected position of the terminal charging coil (not illustrated) that is included in mobile device 15 (S10 in FIG. 10), and thereafter, causes charging coil controller 38 to start charging (S11 and S12 in FIG. 10).

During charging, it is determined whether or not charging needs to be continued (whether or not charging is completed) by the same operation as in PTL 1 (Japanese Patent Unexamined Publication No. 2009-247194) (S13 in FIG. 10), and if charging is completed (full charging), controller 10 ends the charging operation (S14 in FIG. 10).

Further, if such a charging operation is completed, controller 10 checks whether or not charging coil 8 is present on point A (S15 in FIG. 10), and thereafter, returns charging coil 8 to point A (S6 in FIG. 10).

The checking can be determined based on the driving amounts of motors 28 and 33 that are stored in X-axis motor controller 36 and Y-axis motor controller 37.

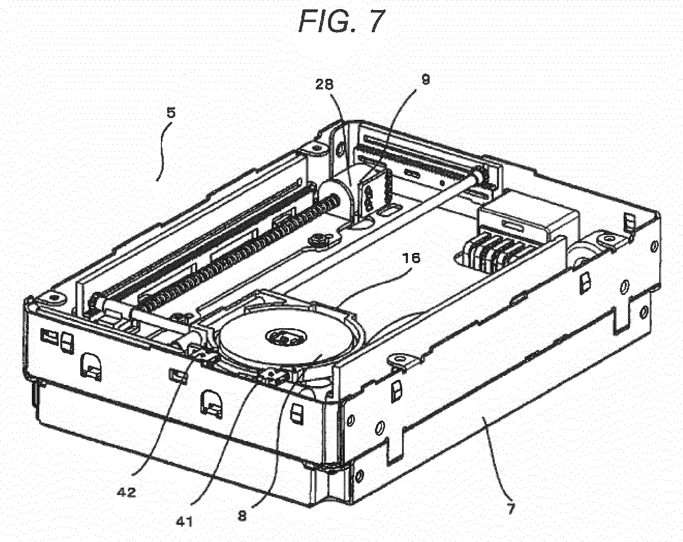

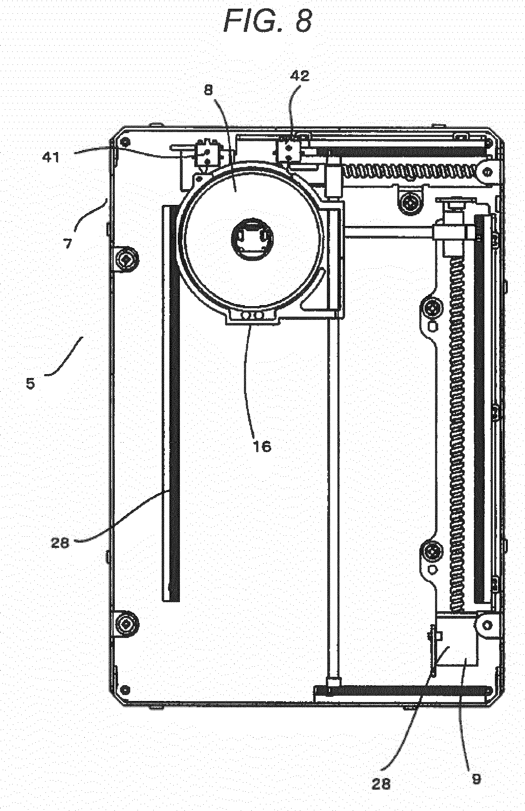

When controller 10 is not able to return charging coil 8 to point A, for example, if the position that is calculated from the driving amounts of motors 28 and 33 that are stored in X-axis motor controller 36 and Y-axis motor controller 37 and the actual position that is measured by position detection coil 14 are different due to some impact during driving, the operation illustrated in FIGS. 7 and 8 is performed.

In other words, controller 10 causes X-axis motor controller 36 and Y-axis motor controller 37 to drive motors 28 and 33 so as to move charging coil 8 to the corner in body case 7.

If switches 41 and 42 are present in the corner portion, and charging coil 8 is moved to the corner in body case 7, these switches 41 and 42 are operated, and thus controller 10 determines that charging coil 8 is moved to an initial value.

Then, in this state, the operation amounts of motors 28 and 33 by X-axis motor controller 36 and Y-axis motor controller 37 are also set to initial values, and position control is performed again from here.

As described above, in the present exemplary embodiment, when the charging operation is completed, charging coil 8 is returned to point A by controller 10, and this will be described in more detail.

Although point A is the center portion of body case 7 as described above, the relationship between point A and position detection coil 14 is as follows.

First, position detection coil 14 will be described.

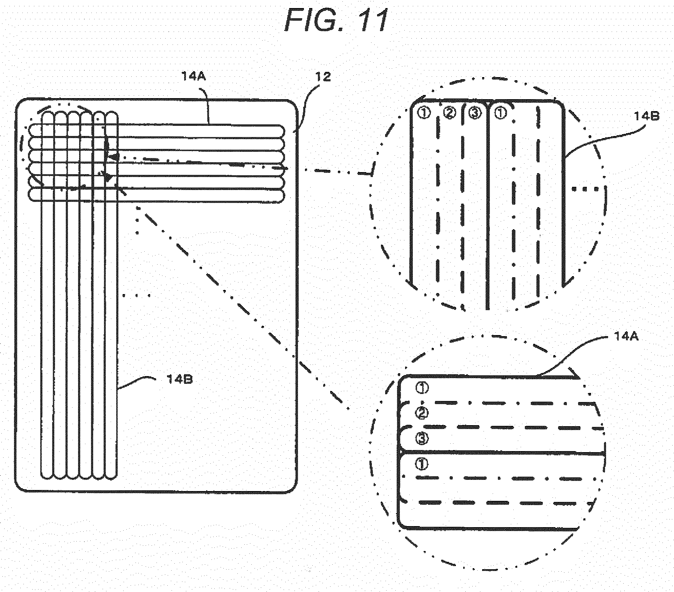

Position detection coil 14 is provided in intermediate plate 12 made of ceramic constituting installation plate 6, but specifically, as in FIG. 11, position detection coil 14A detecting the position in an X-axis direction and position detection coil 14B detecting the position in a Y-axis direction are respectively provided on the surface side of intermediate plate 12 and the rear side of intermediate plate 12.

In addition, position detection coil 14A and position detection coil 14B are in a state of being perpendicular through intermediate plate 12 made of ceramic constituting installation plate 6.

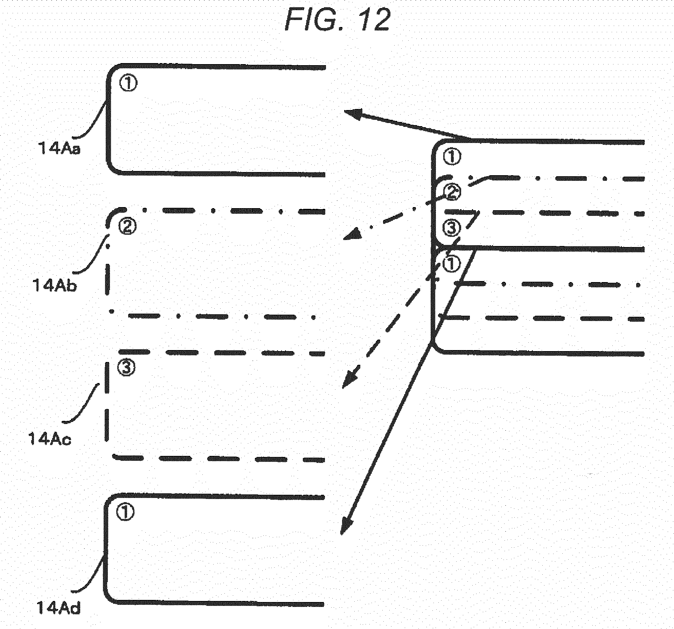

As will be understood from FIGS. 11 and 12, position detection coil 14A detecting the position in the X-axis direction is formed so that a plurality of position detection coils 14Aa, 14Ab, 14Ac, and 14Ad are arranged for each predetermined interval in a longitudinal direction of intermediate plate 12 made of ceramic constituting installation plate 6.

As illustrated in FIG. 12, these position detection coils 14Aa, 14Ab, 14Ac, and 14Ad are formed into a rectangular loop shape, but they are arranged by being shifted by the one-third dimension in the short side direction.

Therefore, in FIG. 12, the lower side of position detection coil 14Aa and the upper side of position detection coil 14Ad are in a state of being superimposed.

Then, in such a state, a plurality of position detection coils 14Aa, 14Ab, 14Ac, and 14Ad are regularly arranged in a longitudinal direction of intermediate plate 12 made of ceramic constituting installation plate 6.

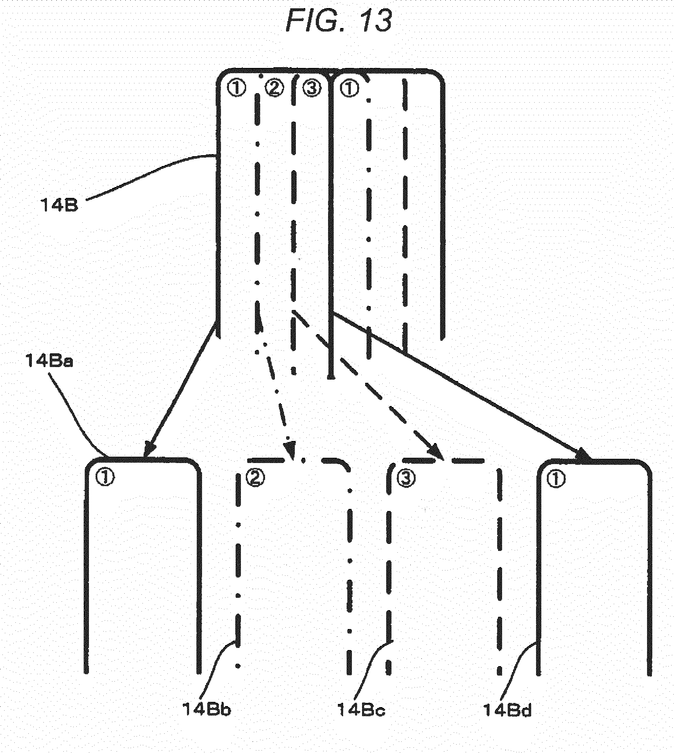

In contrast, as will be understood from FIGS. 11 and 13, position detection coil 14B detecting the position in the Y-axis direction is formed by disposing a plurality of position detection coils 14Ba, 14Bb, 14Bc, and 14Bd for each predetermined interval in the lateral direction of intermediate plate 12 made of ceramic constituting installation plate 6.

As illustrated in FIG. 13, these position detection coils 14Ba, 14Bb, 14Bc, and 14Bd are formed into a rectangular loop shape, but they are arranged by being shifted by the one-third dimension in the short side direction.

Therefore, in FIG. 13, the right side of position detection coil 14Ba and the left side of position detection coil 14Bd are in a state of being superimposed.

Then, in this state, a plurality of position detection coils 14Ba, 14Bb, 14Bc, and 14Bd are disposed regularly in the lateral direction of intermediate plate 12 made of ceramic constituting installation plate 6.

What is important here is that the center point of charging coil 8 on standby at point A described above is in a state which does not overlap the center line of any position detection coil 14B.

In other words, after the completion of charging, charging coil 8 is moved to A position which does not overlap the center line of any position detection coil 14 (a portion deviated from the center line of position detection coil 14), and is on standby at A position (S2 or S7 in FIG. 10).

In addition, in the present exemplary embodiment, since the detection (S8 in FIG. 10) as to whether or not mobile device 15 is placed on the upper surface of installation plate 6 is performed on position detection coil 14B side, the position which does not overlap the center line of position detection coil 14B is set to A position which is a standby position of charging coil 8.

Of course, the detection (S8 in FIG. 10) as to whether or not mobile device 15 is placed on the upper surface of installation plate 6 may be performed on position detection coil 14A side, and in this case, the position which does not overlap the center line of position detection coil 14 is set to A position which is a standby position of charging coil 8.

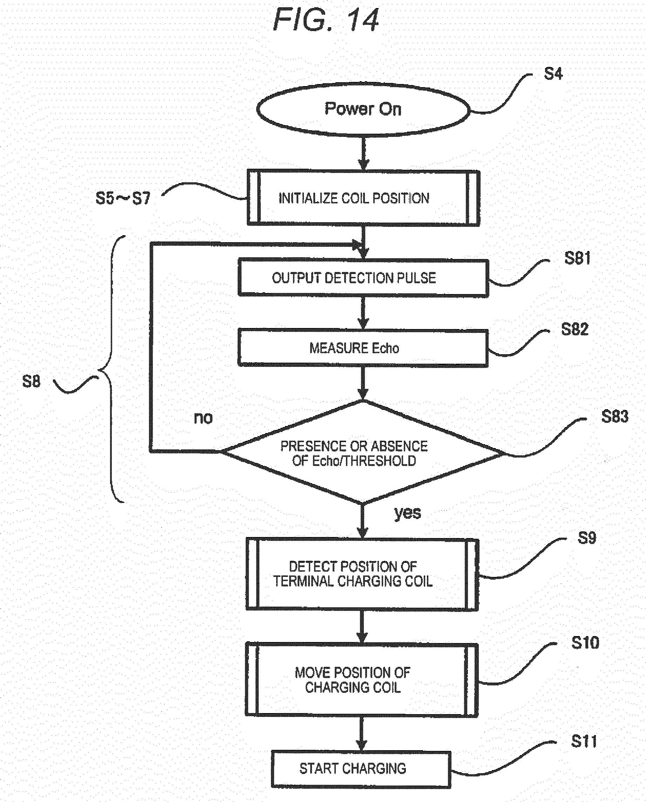

If describing the operation in detail based on the configuration described above, if power switch 40 is turned on (S4 in FIG. 10) in order to charge mobile device 15, controller 10 checks whether or not charging coil 8 is present on point A as described above (S5 in FIGS. 10 and 14).

The checking can be determined based on the driving amounts of motors 28 and 33 that are stored in X-axis motor controller 36 and Y-axis motor controller 37.

Then, when it is determined that charging coil 8 is not present on point A, charging coil 8 is moved to point A by controller 10 (S6 in FIGS. 10 and 14), and point A is set to a charging standby state (S7 in FIGS. 10 and 14).

Next, controller 10 detects a position on the upper surface of installation plate 6 in which mobile device 15 is placed, using position detection coil 14, as in FIG. 3 (S8 and S9 in FIGS. 10 and 14).

In addition, the location where mobile device 15 is placed is actually the location of a terminal charging coil (not illustrated) built into mobile device 15.

If describing this point, when detecting a position on the upper surface of installation plate 6 in which mobile device 15 is placed, using position detection coil 14, as in FIG. 3, the pulse signal of 1 MHz is sequentially provided from detection coil controller 39 of FIG. 9 to position detection coil 14B.

At this time, controller 10 determines whether or not mobile device 15 is placed in any position on the upper surface of installation plate 6 as in FIG. 3, depending on whether or not there is an echo signal from the terminal charging coil (not illustrated) of mobile device 15 (S82 and S83 in FIG. 14).

The echo signal caught by position detection coil 14B at this time is temporarily stored in memory 10a of FIG. 9.

The terminal charging coil (not illustrated) of mobile device 15 is formed to resonate at 1 MHz before charging, as is well known. Thus, when pulse signals of 1 MHz are sequentially output from position detection coil 14B described above, a large echo signal is generated from the terminal charging coil, and is captured by position detection coil 14B.

Thus, controller 10 detects a position on the upper surface of installation plate 6 in which mobile device 15 is placed, as in FIG. 3.

If it is determined that mobile device 15 is placed on the upper surface of installation plate 6 in this manner, thereafter, controller 10 operates detection coil controller 39 to sequentially supply pulse signals of 1 MHz to position detection coil 14A and position detection coil 14B, and specify the position of the terminal charging coil (not illustrated) of mobile device 15 (S9 in FIG. 14).

Next, controller 10 causes X-axis motor controller 36 and Y-axis motor controller 37 to drive motors 28 and 33 so as to move charging coil 8 to the detected position of the terminal charging coil that is included in mobile device 15 (S10 in FIGS. 10 and 14), and thereafter, causes charging coil controller 38 to start charging (S11 and S12 in FIGS. 10 and 14).

Next, the most significant feature points in the present exemplary embodiment will be described.

The most significant feature point in the present exemplary embodiment is disposing position detection coil 14B as a foreign matter detector that detects the state in which there is a foreign matter on the upper surface of installation plate 6 on or below installation plate 6.

Further, position detection coil 14B (foreign matter detector) and an alarm unit (43 in FIGS. 2, 3, and 9) that emits an alarm when a foreign matter is detected by position detection coil 14B (foreign matter detector) are connected to controller 10 as in FIG. 9.

In addition, controller 10 is formed to alternately drive position detectors (both position detection coils 14A and 14B) and position detection coil 14B alone (foreign matter detector), and drive alarm unit 43 if the detection level that is detected by position detection coil 14B alone (foreign matter detector) is higher than a threshold.

Hereinafter, this point will be described in detail.

Alarm unit 43 is connected to controller 10 as illustrated in FIG. 9, and alarm unit 43 is mounted in body case 7 as illustrated in FIGS. 2 and 3.

Further, position detection coils 14A and 14B are connected to controller 10 connected to alarm unit 43 through detection coil controller 39.

Further, as illustrated in FIGS. 2 and 3, upper protruding portion 7a protruding upward from installation plate 6 is provided in a portion of body case 7 on the circumference of installation plate 6, and alarm unit 43 and power switch 40 are provided in upper protruding portion 7a of body case 7.

In other words, since mobile device 15 receives the vibration and the inertial force associated with traveling, upper protruding portion 7a is provided in the part of body case 7 on the circumference of installation plate 6, and at the time of charging of mobile device 15, mobile device 15 is prevented from dropping out of body case 7.

However, if upper protruding portion 7a is provided in the part of body case 7 on the circumference of installation plate 6 in this manner, a recess is present on the upper surface of body case 7, such that a driver or a passenger would leave a conductive foreign matter such as a coin on the recess portion, that is, on the upper surface of installation plate 6.

If charging is started in a state of placing mobile device 15 on the foreign matter, the magnetic flux supplied from charging coil 8 also results in a temperature increase in the coin that is the foreign matter.

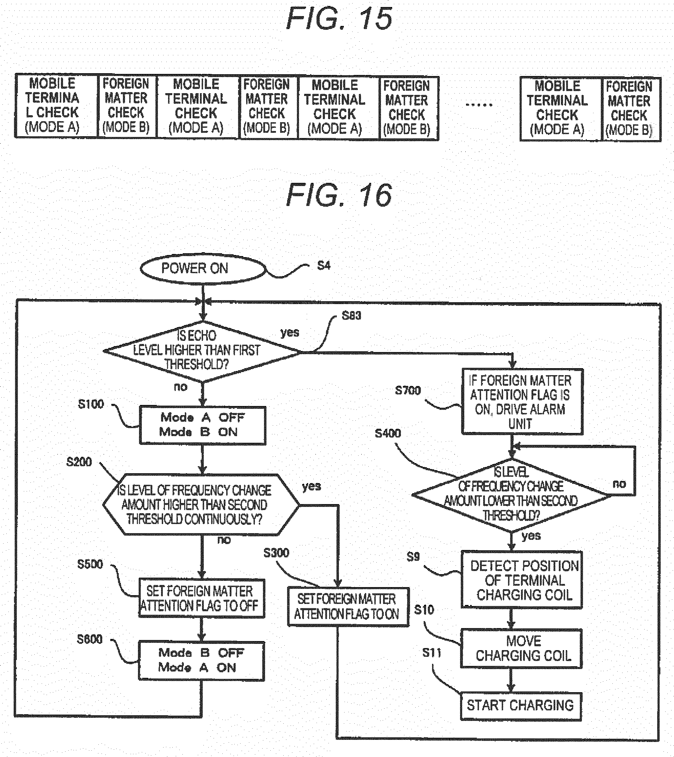

Then, in the present exemplary embodiment, as illustrated in FIG. 16, if power switch 40 is turned on, controller 10 alternately drives the position detectors (both position detection coils 14A and 14B), and position detection coil 14B alone (foreign matter detector), directly or prior to determining whether or not mobile device 15 is placed in any position on the upper surface of installation plate 6, as in FIG. 3 (S8 in FIG. 10).

In other words, controller 10 is formed to alternately drive mode A of driving the position detectors (both position detection coils 14A and 14B) of FIG. 15 and mode B of driving position detection coil 14B alone (foreign matter detector).

If the detection level that is detected by position detection coil 14B alone (foreign matter detector) is higher than a threshold in mode B, controller 10 stores information in which a foreign matter attention flag is set to ON in memory 10a. Thereafter, after determining that mobile device 15 is placed on the upper surface of installation plate 6 as in FIG. 3 (S82 and S83 in FIG. 14), if checking foreign matter attention flag ON stored in memory 10a, controller 10 drives alarm unit 43 (flashes a red light source, or makes a warning sound) (S700 in FIG. 16).

Thus, the user removes, for example, the coin in response to the alarm by alarm unit 43, and as a result, it is possible to suppress an increase in the temperature of the coin.

This point will be described in more detail with reference to FIG. 16.

Controller 10 detects a position on the upper surface of installation plate 6 in which mobile device 15 is placed, using position detection coil 14, as in FIG. 3 (S83). This process is the same as S82 and S83 of FIG. 14.

In other words, if power switch 40 is turned on, controller 10 is formed to cause detection coil controller 39 to supply a signal of 1 MHz at a predetermined interval to position detection coil 14B, as in FIG. 15, and subsequently detect an echo signal (S81 and S82 in FIG. 14).

At this time, controller 10 temporarily stores the echo signal caught by position detection coil 14B in memory 10a of FIG. 9, and compares the echo signal with the first threshold.

Then, if the echo signal is greater than the first threshold, controller 10 detects that mobile device 15 is placed in any position on the upper surface of installation plate 6, as in FIG. 3 (Yes in S83 in FIG. 16).

Next, the process proceeds to S700, and controller 10 checks foreign matter attention flag ON stored in memory 10a, and drives alarm unit 43 (flashes a red light source, or makes a warning sound).

Thereafter, since the user checks whether or not for example, the coin is removed through the alarm of alarm unit 43, controller 10 drives mode B of position detection coil 14B alone (foreign matter detector) (S400).

Then, controller 10 operates detection coil controller 39 to sequentially supply pulse signals of 1 MHz to position detection coil 14A and position detection coil 14B, and specify the position of the terminal charging coil (not illustrated) of mobile device 15 (S9 in FIGS. 10, 14, and 16).

Then, if the position of the terminal charging coil (not illustrated) of mobile device 15 can be specified, controller 10 causes X-axis motor controller 36 and Y-axis motor controller 37 to drive motors 28 and 33 so as to move charging coil 8 to the detected position of the terminal charging coil that is included in mobile device 15 (S10 in FIGS. 10, 14, and 16), and thereafter, causes charging coil controller 38 to start charging (S11 in FIGS. 10, 14, and 16).

When mobile device 15 is not placed in any position on the upper surface of installation plate 6, the echo signal cannot be captured in position detection coil 14B, such that the process returns from S83 to S81 in FIG. 14, and subsequently controller 10 causes detection coil controller 39 to supply a signal of 1 MHz at a predetermined interval to position detection coil 14B, as in FIG. 15, and detects an echo signal (S81 and S82 in FIG. 14).

In other words, in mode A of determining whether or not mobile device 15 is placed in any position on the upper surface of installation plate 6, as in FIG. 3, the above-described operation is repeated.

In contrast, at the time of mode B of detecting whether or not a conductive foreign matter is placed on the upper surface of installation plate 6, controller 10 stops the supply of the signal of 1 MHz that has been supplied to position detection coil 14B by using detection coil controller 39. Subsequently, controller 10 supplies, for example, a signal of about 10 KHz to 100 KHz, as in FIG. 15, at a predetermined interval, to position detection coil 14B by using detection coil controller 39 as the foreign matter checking mode (S100 in FIG. 16).

In other words, position detection coil 14B is intended to be used as a component of the foreign matter detector.

In this way, a technology for detecting a conductive foreign matter by supplying a signal of about 10 KHz to 100 KHz to the coil is well known, for example, as a technology used when probing a metal body buried in soil, such that a simple explanation will be made in order to avoid the complication of the description. According to this technology, if a signal of 10 KHz to 100 KHz is supplied from position detection coil 14B, when a metal (coin) is present in the vicinity, a frequency change occurs, and this allows the presence of a metal (coin) to be detected.

The level of the frequency change that is detected in this case is adapted to be stored in memory 10a.

In other words, when the detected level of the frequency change amount is higher than a threshold at the time of a foreign matter checking mode, controller 10 checks again the presence of the foreign matter in the foreign matter checking period (mode B) illustrated in FIG. 15. When the detected level of the frequency change is higher than a threshold continuously a plurality of times, controller 10 sets the foreign matter attention flag to ON (S200 and S300 in FIG. 16).

Meanwhile, when the detected level of the frequency change is not higher than a threshold continuously a plurality of times, controller 10 sets the foreign matter attention flag to "OFF" (S200 and S500 in FIG. 16). Subsequently, controller 10 changes the operation from mode B to mode A of determining whether or not mobile device 15 is placed in any position on the upper surface of installation plate 6, as in FIG. 3 (S600).

As described above, in the present exemplary embodiment, position detection coil 14B as a foreign matter detector that detects the state in which there is a foreign matter on the upper surface of installation plate 6 is placed on or below installation plate 6.

Further, position detection coil 14B (foreign matter detector) and an alarm unit (43 in FIGS. 2, 3, and 9) that emits an alarm when a foreign matter is detected by position detection coil 14B (foreign matter detector) are connected to controller 10 as in FIG. 9.

In addition, controller 10 is formed to alternately drive position detectors (both position detection coils 14A and 14B) and position detection coil 14B alone (foreign matter detector), and set the foreign matter attention flag to ON if the detection level that is detected by position detection coil 14B alone (foreign matter detector) is higher than a threshold.

Therefore, after the user places mobile device 15 in any position on the upper surface of installation plate 6, as in FIG. 3, the user removes, for example, the coin in response to the alarm by alarm unit 43, and as a result, it is possible to suppress an increase in the temperature of the coin.

### (Modification example of Exemplary embodiment 1)

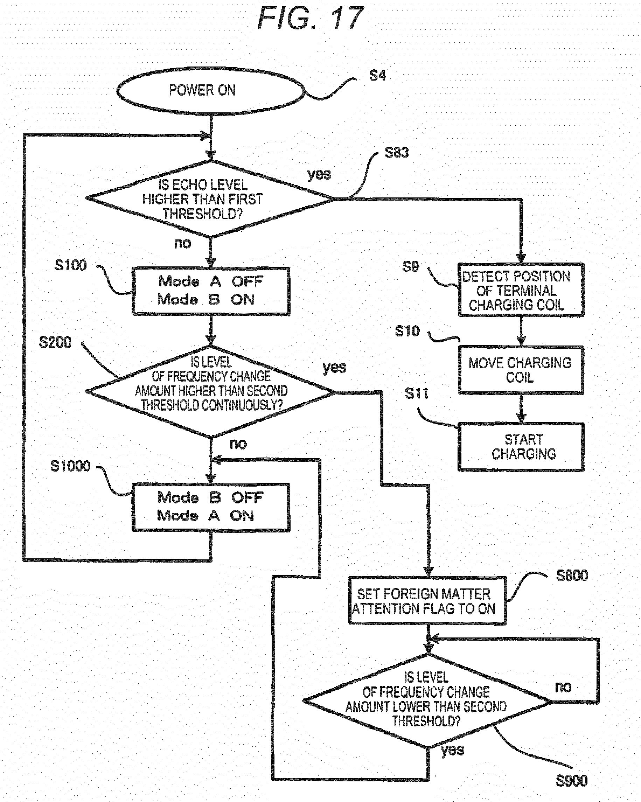

Next, a modification example of Exemplary embodiment 1 will be described with reference to FIG. 17.

A modification example of Exemplary embodiment 1 is formed such that alarm unit 43 is driven (a red light source is flashed, or a warning sound is made) according to a condition in which the detection level detected by position detection coil 14B is lower than the first threshold, and a condition in which the detection level detected by the foreign matter detector is higher than the second threshold.

Therefore, the user removes, for example, the coin in response to the alarm by alarm unit 43, and as a result, it is possible to suppress an increase in the temperature of the coin.

Further, at the time of alarm of alarm unit 43, it is possible to make charging coil 8 be in a non-energized state, and even in this way, it is possible to suppress an increase in the temperature of the foreign matter.

The operation of the modification example will be described in more detail. When detecting a position on the upper surface of installation plate 6 in which mobile device 15 is placed, as in FIG. 3, a pulse signal of 1 MHz is sequentially supplied from detection coil controller 39 of FIG. 9 to position detection coil 14B, as the mobile device checking mode. At this time, controller 10 determines whether or not mobile device 15 is placed in any position on the upper surface of installation plate 6, as in FIG. 3, depending on whether or not there is an echo signal from the terminal charging coil (not illustrated) of mobile device 15 (S82 and S83 in FIG. 14).

In other words, if power switch 40 is turned on, controller 10 causes charging coil controller 38 to supply a signal of 1 MHz at a predetermined interval to position detection coil 14B, as in FIG. 15, and subsequently detects an echo signal (S81 and S82 in FIG. 14).

The terminal charging coil (not illustrated) of mobile device 15 is formed to resonate at 1 MHz before charging, as is well known. Thus, when pulse signals of 1 MHz are sequentially output from position detection coil 14B described above, a large echo signal is generated from the terminal charging coil. The echo signal is captured by position detection coil 14B, and thus it is detected that mobile device 15 is placed in any position on the upper surface of installation plate 6, as in FIG. 3 (S83 in FIGS. 14 and 17).

The echo signal caught by position detection coil 14B at this time is temporarily stored in memory 10a of FIG. 9, and is compared with a first threshold.

Then, if the echo signal is greater than the first threshold, it is determined that mobile device 15 is placed in any position on the upper surface of installation plate 6, as in FIG. 3. Then, controller 10 operates detection coil controller 39 to sequentially supply pulse signals of 1 MHz to position detection coil 14A and position detection coil 14B, and specify the position of the terminal charging coil (not illustrated) of mobile device 15 (S9 in FIGS. 10, 14, and 17).

Then, if the position of the terminal charging coil (not illustrated) of mobile device 15 can be specified, controller 10 causes X-axis motor controller 36 and Y-axis motor controller 37 to drive motors 28 and 33 so as to move charging coil 8 to the detected position of the terminal charging coil that is included in mobile device 15 (S10 in FIGS. 10, 14, and 17), and thereafter, causes charging coil controller 38 to start charging (S11 in FIGS. 10, 14, and 17).

Further, when mobile device 15 is not placed even in any position on the upper surface of installation plate 6, the echo signal cannot be captured in position detection coil 14B, such that the process returns from S83 to S81 in FIG. 14, and subsequently, controller 10 causes charging coil controller 38 to supply a signal of 1 MHz at a predetermined interval to position detection coil 14B, as in FIG. 15, and subsequently detects an echo signal (S81 and S82 in FIG. 14).

In such a configuration, in a state where a metal foreign matter made of a magnetic material, for example, a coin is placed on the upper surface of installation plate 6, even when mobile device 15 is placed by being overlapped with the coin on top of the coin, an echo signal can be captured by position detection coil 14B, but in this case, controller 10 performs the operation illustrated in FIG. 17.

In other words, at this time, since mobile device 15 is placed on the coin, the echo signal captured by position detection coil 14B is smaller than the first threshold, at this time, controller 10 shifts to a foreign matter checking mode of checking the presence of a foreign matter.

In other words, controller 10 stops the supply of the signal of 1 MHz that has been supplied to position detection coil 14B by using charging coil controller 38, and subsequently, controller 10 supplies, for example, a signal of about 10 KHz to 100 KHz, as in FIG. 15, at a predetermined interval, to position detection coil 14B by using charging coil controller 38 as the foreign matter checking mode (S100 in FIG. 17).

In other words, position detection coil 14B is intended to be used as a component of the foreign matter detector.

In this way, a technology for detecting a metal foreign matter by supplying a signal of about 10 KHz to 100 KHz to the coil is well known, for example, as a technology used when probing a metal body buried in soil, such that a simple explanation will be made in order to avoid the complication of the description. If a signal of 10 KHz to 100 KHz is supplied from position detection coil 14B, when a metal (coin) is present in the vicinity, a frequency change occurs, and this allows the presence of a metal (coin) to be detected.

The level of the frequency change that is detected in this case is adapted to be stored in memory 10a.

In other words, in the foreign matter checking mode, when the detected level of the frequency change amount is higher than the second threshold, controller 10 checks again the presence of a foreign matter during the foreign matter checking period illustrated in FIG. 15, and when the detected level of the frequency change is higher than the second threshold continuously a plurality of times, controller 10 emits an alarm from alarm unit 43 (S200 and S800 in FIG. 17).

As described above, alarm unit 43 is provided in upper protruding portion 7a on the circumference of installation plate 6. Since alarm unit 43 and power switch 40 are provided in upper protruding portion 7a of body case 7, a driver or a passenger can easily notice this, and immediately remove the coin.

Thereafter, if a signal of 100 KHz is supplied from position detection coil 14B, the detected level of the detected frequency change amount is equal to or lower than the second threshold (S900 in FIG. 17), in this case, the foreign matter checking mode of FIG. 15 is stopped, and the mobile device checking mode is driven at a predetermined interval (S1000 in FIG. 17), and the process returns again to S83 in FIG. 17.

In other words, if a foreign matter such as a coin is detected, the process does not proceed to charging start (S11 in FIG. 17), such that it is possible to suppress an increase in the temperature of the coin.

Further, if the foreign matter such as a coin is removed, the process returns to S83 of FIG. 17, and a signal of 1 MHz is supplied to position detection coil 14B at a predetermined interval as the mobile device checking mode, and the presence or absence of mobile device 15 is checked.

Further, in S200 of FIG. 17, even if the foreign matter such as a coin is voluntarily removed from installation plate 6, the foreign matter checking mode of FIG. 15 is stopped and the mobile device checking mode is driven at a predetermined interval, in S1000 in FIG. 17, and the process returns again to S83 in FIG. 17.

As described above, even if it is determined by position detection coil 14B used as the position detector that mobile device 15 is placed on installation plate 6, if for example, a foreign matter such as a coin is placed on the upper surface of installation plate 6, the detection level detected by position detection coil 14B is lower than the first threshold. The modification example is formed such that alarm unit 43 is driven according to a condition in which the detection level detected by position detection coil 14B is lower than the first threshold, and a condition in which the detection level detected by the foreign matter detector is higher than the second threshold.

Therefore, the user removes, for example, the coin in response to the alarm by alarm unit 43, and as a result, it is possible to suppress an increase in the temperature of the coin.

Further, at the time of alarm of alarm unit 43, it is possible to make charging coil 8 be in a non-energized state, and even in this way, it is possible to suppress an increase in the temperature of the foreign matter.

Hitherto, the exemplary embodiment of the present invention and the modification example have been described.

In addition, although it is formed that charging coil 8 (movable charging coil) is moved to the position facing the terminal charging coil (not illustrated) of mobile device 15 by driving means 9, in the lower surface of installation plate 6 in the above embodiment, it may be formed that a plurality of charging coils 8 (fixed charging coil) are provided, and charging coil 8 at the position facing the charging coil (not illustrated) of mobile device 15 is energized.

Further, in the above embodiment, although position detection coil 14 is also utilized as the foreign matter detector that detects that a foreign matter is present (placed) on the upper surface of installation plate 6, as in FIG. 3, in addition to the position detector that detects a position of the upper surface of installation plate 6 in which mobile device 15 is placed, the foreign matter detector may be formed with a coil (not illustrated) provided separately from position detection coil 14.

### INDUSTRIAL APPLICABILITY

As described above, in the embodiment of the present invention and the modification example, a controller is formed to alternately drive the position detector and the foreign matter detector, and to drive the alarm unit when the detection level that is detected by the foreign matter detector is greater than a threshold.

Therefore, the user removes, for example, the foreign matter in response to the alarm by the alarm unit, and as a result, it is possible to suppress an increase in the temperature of the foreign matter.

Therefore, the usage of an in-automobile contactless charger or a home contactless charger is expected.

### REFERENCE MARKS IN THE DRAWINGS

- 1: AUTOMOBILE
- 2: AUTOMOBILE INTERIOR
- 3: STEERING WHEEL
- 4: ELECTRONIC DEVICE
- 5: CONTACTLESS CHARGER
- 6: INSTALLATION PLATE
- 7: BODY CASE
- 8: CHARGING COIL
- 9: DRIVING MEANS
- 10: CONTROLLER
- 10a: MEMORY
- 11: SURFACE PLATE
- 12: INTERMEDIATE PLATE
- 13: BACK PLATE
- 14, 14A, 14B: POSITION DETECTION COIL
- 15: MOBILE DEVICE
- 16: HOLDER
- 17: SUPPORT LEG
- 18: SUPPORT PLATE
- 19: CONTROL BOARD
- 20: LOWER PLATE
- 21: SUPPORT BODY
- 22: X-AXIS DRIVE SHAFT
- 23: Y-AXIS DRIVE SHAFT
- 24: THROUGH HOLE
- 25: WORM WHEEL
- 26: GEAR
- 27: WORM
- 28: MOTOR
- 29: GEAR PLATE
- 30: WORM WHEEL
- 31: GEAR
- 32: WORM
- 33: MOTOR
- 34: GEAR PLATE
- 35: FLEXIBLE WIRING
- 36: X-AXIS MOTOR CONTROLLER
- 37: Y-AXIS MOTOR CONTROLLER
- 38: CHARGING COIL CONTROLLER
- 39: DETECTION COIL CONTROLLER
- 40: POWER SWITCH
- 41: SWITCH
- 42: SWITCH
- 43: ALARM UNIT

## Claims

1. A contactless charger (5) in which an upper surface of a body case is an installation plate (6), the contactless charger (5) comprising:
a charging coil (8) that is disposed below the installation plate (6);
a position detector that is disposed on or below the installation plate (6), and detects a presence of a mobile device (15) on the installation plate (6);
a foreign matter detector that detects a conductive foreign matter that is present on the installation plate (6)
**characterized in that**
a controller (10) that drives an alarm unit (43) that emits an alarm to a user, based on detection results of the position detector and the foreign matter detector,
wherein after the foreign matter detector detects the presence of the conductive foreign matter using an echo signal of a pulse signal with a first frequency, if the position detector detects the mobile device (15) using an echo signal of a pulse signal with a second frequency different from the first frequency, the controller (10) drives the alarm unit (43).

2. The contactless charger (5) of claim 1,
wherein the controller (10) alternately drives the position detector and the foreign matter detector.

3. The contactless charger (5) of claim 1,
wherein the position detector is formed of a plurality of detection coils (14) that are disposed on or below the installation plate (6).

4. The contactless charger (5) of claim 1,
wherein the foreign matter detector uses the detection coils (14) constituting the position detector.

5. A computer program product comprising instructions which, when the program is executed by a computer, cause the computer to carry out steps of: a position detection step of detecting a presence of a mobile device (15) on an installation plate (6) of a contactless charger (5);
a foreign matter detection step of detecting a conductive foreign matter that is present on the installation plate (6)
**characterized in that**
an alarm step of emitting an alarm to a user, if the presence of the mobile device (15) is detected in the position detection step using an echo signal of a pulse signal with a given frequency, after the presence of the conductive foreign matter is detected in the foreign matter detection step using an echo signal of a pulse signal with another frequency.

6. An automobile equipped with the contactless charger of claim 1.

7. A contactless charger of any of claims 1 to 4,
wherein when a detection level detected by the position detector is lower than a first threshold, and a detection level detected by the foreign matter detector is higher than a second threshold, the controller drives the alarm unit.

8. The contactless charger (5) of claim 7,
wherein the charging coil (8) is formed of a plurality of fixed charging coils (8) that are disposed below the installation plate (6), or a movable charging coil (8) that is movably disposed while facing a lower surface of the installation plate (6).

9. The contactless charger (5) of any one of claims 7 and 8,
wherein when the detection level detected by the position detector is lower than the first threshold, and the detection level detected by the foreign matter detector is higher than the second threshold, the controller (10) is formed to drive the alarm unit (43), and to make the charging coil (8) be in a non-energized state.

10. A charging method using the contactless charger (5) of any one of claims 7 to 9, the charging method comprising:
a first step of detecting that an object having a possibility of a temperature increase due to a magnetic flux from the charging coil (8) is placed on an upper surface of the installation plate (6) by the position detector and the foreign matter detector;
a second step of detecting whether or not an object placed on the upper surface of the installation plate (6) is a mobile device (15) or a foreign matter; and
a third step of detecting a position, on the upper surface of the installation plate (6), in which the mobile device (15) is placed, and then charging the mobile device (15) by the charging coil (8) at a portion corresponding to the position in which the mobile device (15) is placed when it is determined that the mobile device (15) is placed on the upper surface of the installation plate (6) in the second step, and emitting an alarm by the alarm unit (43) when it is determined that the foreign matter is placed on the upper surface of the installation plate (6) in the second step.

11. The charging method of claim 10,
wherein a foreign matter detection is performed a plurality of times in the second step, and when the foreign matter is detected a plurality of times, the alarm unit (43) emits an alarm in the third step.

12. An automobile (1) equipped with the contactless charger (5) of any one of claims 7 to 9.

13. The automobile (1) of claim 12,
wherein at least a portion of a body case (7) portion on a circumference of the installation plate (6) protrudes upward from the installation plate (6).

14. The automobile (1) of claim 13,
wherein the alarm unit (43) is provided in the upper protruding portion on the circumference of the installation plate (6).

## Patentansprüche

1. Kontaktlose Ladevorrichtung (5), bei der eine obere Fläche einer Gehäuseverkleidung eine Auflegeplatte (6) ist, wobei die kontaktlose Ladevorrichtung (5) umfasst:
eine Ladespule (8), die unterhalb der Auflegeplatte (6) angeordnet ist;
einen Positions-Detektor, der an oder unterhalb der Auflegeplatte (6) angeordnet ist und ein Vorhandensein eines Mobilgerätes (15) auf der Auflegeplatte (6) erfasst;
einen Fremdkörper-Detektor, der einen auf der Auflegeplatte (6) vorhandenen leitenden Fremdkörper erfasst,
**dadurch gekennzeichnet, dass**
eine Steuereinrichtung (10) eine Warn-Einheit (43), die eine Warnung an einen Benutzer ausgibt, auf Basis von Erfassungsergebnissen des Positions-Detektors und des Fremdkörper-Detektors ansteuert,
wobei, nachdem der Fremdkörper-Detektor das Vorhandensein des leitenden Fremdkörpers unter Verwendung eines Echo-Signals eines Impuls-Signals mit einer ersten Frequenz erfasst hat, wenn der Positions-Detektor das Mobilgerät (15) unter Verwendung eines Echo-Signals eines Impuls-Signals mit einer zweiten Frequenz erfasst, die sich von der ersten Frequenz unterscheidet, die Steuereinrichtung (10) die Warn-Einheit (43) ansteuert.

2. Kontaktlose Ladevorrichtung (5) nach Anspruch 1,
wobei die Steuereinrichtung (10) abwechselnd den Positions-Detektor und den Fremdkörper-Detektor ansteuert.

3. Kontaktlose Ladevorrichtung (5) nach Anspruch 1,
wobei der Positions-Detektor aus einer Vielzahl von Erfassung-Spulen (14) besteht, die an oder unterhalb der Auflegeplatte (6) angeordnet sind.

4. Kontaktlose Ladevorrichtung (5) nach Anspruch 1,
wobei der Fremdkörper-Detektor die Erfassungsspulen (14) nutzt, die den Positions-Detektor bilden.

5. Computerprogramm-Erzeugnis, das Befehle umfasst, die, wenn das Programm von einem Computer ausgeführt wird, den Computer veranlassen, die folgenden Schritte durchzuführen:
einen Positionserfassungs-Schritt, in dem ein Vorhandensein eines Mobilgerätes (15) auf einer Auflegeplatte (6) einer kontaktlosen Ladevorrichtung (5) erfasst wird;
einen Fremdkörpererfassungs-Schritt, in dem ein auf der Auflegeplatte (6) vorhandener leitender Fremdkörper erfasst wird,
**gekennzeichnet durch**
einen Warn-Schritt, in dem eine Warnung an einen Benutzer ausgegeben wird, wenn das Vorhandensein des Mobilgerätes (15) in dem Positionserfassungs-Schritt unter Verwendung eines Echo-Signals eines Impuls-Signals mit einer bestimmten Frequenz erfasst wird, nachdem das Vorhandensein des leitenden Fremdkörpers in dem Fremdkörpererfassungs-Schritt unter Verwendung eines Echo-Signals eines Impuls-Signals mit anderer Frequenz erfasst worden ist.

6. Kraftfahrzeug, das mit der kontaktlosen Ladevorrichtung nach Anspruch 1 versehen ist.

7. Kontaktlose Ladevorrichtung nach einem der Ansprüche 1 bis 4, wobei, wenn ein durch den Positions-Detektor erfasster Erfassungs-Pegel unter einem ersten Schwellenwert liegt und ein durch den Fremdkörper-Detektor erfasster Erfassungs-Pegel über einem zweiten Schwellenwert liegt, die Steuereinrichtung die Warn-Einheit ansteuert.

8. Kontaktlose Ladevorrichtung (5) nach Anspruch 7,
wobei die Ladespule (8) aus einer Vielzahl stationärer Ladespulen (8), die unterhalb der Auflegeplatte (6) angeordnet sind, oder einer beweglichen Ladespule (8) besteht, die beweglich angeordnet und dabei einer Unterseite der Auflegeplatte (6) zugewandt ist.

9. Kontaktlose Ladevorrichtung (5) nach einem der Ansprüche 7 und 8,
wobei die Steuereinrichtung (10) so ausgebildet ist, dass sie, wenn der durch den Positions-Detektor erfasste Erfassungs-Pegel unter dem ersten Schwellenwert liegt und der durch den Fremdkörper-Detektor erfasste Erfassungs-Pegel über dem zweiten Schwellenwert liegt, die Warn-Einheit (43) ansteuert und veranlasst, dass sich die Ladespule (8) in einem stromlosen Zustand befindet.

10. Ladeverfahren unter Verwendung der kontaktlosen Ladevorrichtung (5) nach einem der Ansprüche 7 bis 9, wobei das Ladeverfahren umfasst:
einen ersten Schritt, in dem durch den Positions-Detektor und den Fremdkörper-Detektor erfasst wird, dass ein Objekt, bei dem ein Temperaturanstieg aufgrund eines Magnetflusses von der Ladespule (8) möglich ist, auf eine Oberseite der Auflegeplatte (6) aufgelegt ist;
einen zweiten Schritt, in dem erfasst wird, ob ein auf die Oberseite der Auflegeplatte (6) aufgelegtes Objekt ein Mobilgerät (15) oder ein Fremdkörper ist; und
einen dritten Schritt, in dem eine Position an der Oberseite der Auflegeplatte (6) erfasst wird, an der das Mobilgerät (15) aufgelegt ist, und dann das Mobilgerät (15) durch die Ladespule (8) an einem Abschnitt geladen wird, der der Position entspricht, an der das Mobilgerät (15) aufgelegt ist, wenn in dem zweiten Schritt festgestellt wird, dass das Mobilgerät (15) auf die Oberseite der Auflegeplatte (6) aufgelegt ist, und durch die Warn-Einheit (43) eine Warnung ausgegeben wird, wenn in dem zweiten Schritt festgestellt wird, dass der Fremdkörper auf die Oberseite der Auflegeplatte (6) aufgelegt ist.

11. Ladeverfahren nach Anspruch 10,
wobei eine Fremdkörper-Erfassung in dem zweiten Schritt mehrmals durchgeführt wird, und, wenn der Fremdkörper mehrmals erfasst wird, die Warn-Einheit (43) in dem dritten Schritt eine Warnung ausgibt.

12. Kraftfahrzeug (1), das mit der kontaktlosen Ladevorrichtung (5) nach einem der Ansprüche 7 bis 9 ausgestattet ist.

13. Kraftfahrzeug (1) nach Anspruch 12,
wobei wenigstens ein Abschnitt einer Gehäuseverkleidung (7) an einem Umfang der Auflegeplatte (6) von der Auflegeplatte (6) nach oben vorsteht.

14. Kraftfahrzeug (1) nach Anspruch 13,
wobei sich die Warn-Einheit (43) in dem oberen vorstehenden Abschnitt an dem Umfang der Auflegeplatte (6) befindet.

## Revendications

1. Chargeur sans contact (5) dans lequel la surface supérieure du boîtier de corps représente une plaque d'installation (6), le chargeur sans contact (5) comprenant :
une bobine de charge (8) qui est placée en dessous de la plaque d'installation (6),
un détecteur de position qui est placé au-dessus ou en dessous de la plaque d'installation (6) et détecte la présence d'un appareil mobile (15) sur la plaque d'installation (6),
un détecteur de matière étrangère qui détecte une matière étrangère conductrice présente sur la plaque d'installation (6),
**caractérisé en ce que**
un contrôleur (10) pilote une unité d'alerte (43) émettant une alerte vers un utilisateur, sur la base de résultats de détection du détecteur de position et du détecteur de matière étrangère,
dans lequel, après que le détecteur de matière étrangère a détecté la présence de la matière étrangère conductrice en utilisant le signal d'écho d'un signal impulsionnel présentant une première fréquence, si le détecteur de position détecte l'appareil mobile (15) en utilisant le signal d'écho d'un signal impulsionnel présentant une fréquence différente de la première fréquence, le contrôleur (10) attaque l'unité d'alerte (43).

2. Chargeur sans contact (5) selon la revendication 1, dans lequel le contrôleur (10) pilote alternativement le détecteur de position et le détecteur de matière étrangère.

3. Chargeur sans contact (5) selon la revendication 1, dans lequel le détecteur de position est formé d'une pluralité de bobines de détection (14) qui sont placées au-dessus ou en dessous de la plaque d'installation (6).

4. Chargeur sans contact (5) selon la revendication 1, dans lequel le détecteur de matière étrangère utilise les bobines de détection (14) constituant le détecteur de position.

5. Produit de programme informatique comprenant des instructions qui, lorsque le programme est exécuté par un ordinateur, amènent l'ordinateur à exécuter les étapes suivantes :
une étape de détection de position consistant à détecter la présence d'un appareil mobile (15) sur la plaque d'installation (6) d'un chargeur sans contact (5),
une étape de détection de matière étrangère consistant à détecter une matière étrangère conductrice présente sur la plaque d'installation (6),
**caractérisé par :**
une étape d'alerte consistant à émettre une alerte vers un utilisateur, si la présence de l'appareil mobile (15) est détectée lors de l'étape de détection de position en utilisant le signal d'écho d'un signal impulsionnel présentant une fréquence donnée, après la détection de la présence de matière étrangère conductrice lors de l'étape de détection de matière étrangère en utilisant le signal d'écho d'un signal impulsionnel présentant une autre fréquence.

6. Automobile équipée du chargeur sans contact de la revendication 1.

7. Chargeur sans contact selon l'une quelconque revendications 1 à 4,
dans lequel, lorsque le niveau de détection détecté par le détecteur de position est inférieur à un premier seuil et que le niveau de détection détecté par le détecteur de matière étrangère est supérieur à un second seuil, le contrôleur attaque l'unité d'alerte.

8. Chargeur sans contact (5) selon la revendication 7,
dans lequel la bobine de charge (8) est formée d'une pluralité de bobines de charge (8) fixes qui sont placées en dessous de la plaque d'installation (6), ou bien d'une bobine de charge (8) mobile qui est placée en pouvant bouger tout en faisant face à la surface inférieure de la plaque d'installation (6).

9. Chargeur sans contact (5) selon l'une quelconque des revendications 7 et 8,
dans lequel, lorsque le niveau de détection détecté par le détecteur de position est inférieur au premier seuil et que le niveau de détection détecté par le détecteur de matière étrangère est supérieur au second seuil, le contrôleur (10) est formé pour attaquer l'unité d'alerte (43) et pour amener la bobine de charge (8) à un état non alimenté.

10. Procédé de charge utilisant le chargeur sans contact (5) conforme à l'une quelconque des revendications 7 à 9, le procédé de charge comprenant :
une première étape consistant à détecter qu'un objet présentant la possibilité d'une augmentation de température due à un flux magnétique issu de la bobine de charge (8) est placé sur la surface supérieure de la plaque d'installation (6), grâce au détecteur de position et au détecteur de matière étrangère,
une deuxième étape consistant à détecter si un objet placé sur la surface supérieure de la plaque d'installation (6) est ou non un appareil mobile (15) ou une matière étrangère, et
une troisième étape consistant à détecter la position, sur la surface supérieure de la plaque d'installation (6), dans laquelle est placé l'appareil mobile (15), puis à charger l'appareil mobile (15) grâce à la bobine de charge (8) au niveau d'une partie correspondant à la position à laquelle est placé l'appareil mobile (15) lorsqu'il est déterminé que l'appareil mobile (15) est placé sur la surface supérieure de la plaque d'installation (6) lors de la deuxième étape, et enfin consistant à émettre une alerte grâce à l'unité d'alerte (43) lorsqu'il est déterminé que la matière étrangère est placée sur la surface supérieure de la plaque d'installation (6) lors de la deuxième étape.

11. Procédé de charge selon la revendication 10,
dans lequel la détection d'une matière étrangère est effectuée une pluralité de fois lors de la deuxième étape, et lorsque la matière étrangère est détectée une pluralité de fois, l'unité d'alerte (43) émet une alerte lors de la troisième étape.

12. Automobile (1) équipée du chargeur sans contact (5) conforme à l'une quelconque des revendications 7 à 9.

13. Automobile (1) selon la revendication 12,
dans laquelle au moins une partie de boîtier de corps (7), sur la circonférence de la plaque d'installation (6), fait saillie vers le haut depuis la plaque d'installation (6).

14. Automobile (1) selon la revendication 13,
dans laquelle l'unité d'alerte (43) est prévue dans la partie supérieure en saillie sur la circonférence de la plaque d'installation (6).
